# EUROPÄISCHE PATENTANMELDUNG

(11) **EP 2 722 027 A2**
(43) Veröffentlichungstag der Anmeldung: **23.04.2014**
(21) Anmeldenummer: 13175648.8
(22) Anmeldetag: 09.07.2013
(51) Int. Cl.: A61G 5/04, B60K 7/00, B62K 5/023, H01M 2/10, A61G 5/10

(54) **Kleinfahrzeug, insbesondere Rollstuhl**

(30) Priorität: 18.10.2012 DE 102012109932
(71) Anmelder: AAT Alber Antriebstechnik GmbH, 72458 Albstadt (DE)
(72) Erfinder:
(74) Vertreter: Kohler Schmid Möbus

(57) **Zusammenfassung**

Ein Kleinfahrzeug (10), insbesondere Rollstuhl, mit einem Sitz (12) und mit mindestens zwei abnehmbaren Laufrädern (14), die einen motorischen Zusatzantrieb aufweisen, wobei der oder die Energiespeicher (16) für die Zusatzantriebe außerhalb der Räder (14) am Fahrzeug (10) angeordnet sind und die Räder (14) über Schnittstellen mit dem Fahrzeug (10) und einer Steuerelektronik verbindbar sind, und die Schnittstellen der Steuerelektronik ihre jeweilige Fahrzeugseite signalisieren und das an sie angeschlossene Laufrad (14) entsprechend dem gewünschten Antriebsverhalten der Laufräder (14) auf der linken und der rechten Fahrzeugseite mit Strom versorgen.

## Beschreibung

Die Erfindung betrifft ein Kleinfahrzeug, insbesondere einen Rollstuhl, mit einem Sitz und mit mindestens zwei abnehmbaren Laufrädern, die einen motorischen Zusatzantrieb aufweisen.

Rollstühle mit Zusatzantrieben weisen in der Regel Nabenmotoren in den Laufrädern auf. Häufig sind auch die Akkus zum Betreiben der Motoren in den Laufrädern angeordnet. Diese werden dadurch relativ schwer, was das Abnehmen und Montieren der Räder erschwert. Es sind daher auch schon Antriebe mit einem außenliegenden, am Rollstuhlrahmen befestigten Akku vorgeschlagen worden.

Die Motoren der Zusatzantriebe unterstützen die über Greifringe in die Laufräder eingeleitete Muskelkraft des Rollstuhlfahrers. Dabei kann abhängig vom Gesundheitszustand des Rollstuhlfahrers die Muskelkraft in einem Arm schwächer sein als im anderen Arm, d. h. der Zusatzantrieb eines Rades muss gegenüber dem Zusatzantrieb des anderen Rades einen höheren Unterstützungsgrad leisten. Es ist daher möglich, die Unterstützungsgrade der Zusatzantriebe der beiden Laufräder unterschiedlich voreinzustellen. Allerdings ist es dann erforderlich, dass nach einer Abnahme der Laufräder, beispielsweise zum Transport des Rollstuhls, bei der erneuten Montage der Laufräder darauf geachtet wird, dass das linke und rechte Laufrad auf der richtigen Seite des Rollstuhls montiert werden. Bei einer falschen Montage ist eine sinnvolle Nutzung des Rollstuhls nicht möglich. Selbst Unfälle können auftreten.

Der vorliegenden Erfindung liegt die Aufgabe zugrunde, ein Kleinfahrzeug und insbesondere einen Rollstuhl zu schaffen, bei dem die Zusatzantriebe der beiden Laufräder unterschiedlich stark sein können und dennoch die Montage der Laufräder kein Problem darstellt.

Die Aufgabe wird gelöst durch ein Kleinfahrzeug, insbesondere einen Rollstuhl, mit einem Sitz und mit mindestens zwei abnehmbaren Laufrädern, die einen motorischen Zusatzantrieb aufweisen, das dadurch gekennzeichnet ist, dass der oder die Energiespeicher für die Zusatzantriebe außerhalb der Räder am Fahrzeug angeordnet sind und dass die Räder über Schnittstellen mit dem Fahrzeug und einer Steuerelektronik verbindbar sind, wobei die Schnittstellen der Steuerelektronik ihre jeweilige Fahrzeugseite signalisieren und das an sie angeschlossene Laufrad entsprechend dem gewünschten Antriebsverhalten der Laufräder auf der linken und der rechten Fahrzeugseite mit Strom versorgen.

Der außerhalb der Räder liegende Energiespeicher und die beiden Schnittstellen mit einer Radseitenerkennung ermöglichen es, die Laufräder beliebig auf einer der beiden Fahrzeugseiten anzubringen. Die Steuerelektronik sorgt dafür, dass das auf der rechten oder linken Seite angebrachte Rad den notwendigen Unterstützungsgrad durch den im Rad angeordneten Zusatzantrieb erhält.

Dadurch ist es auch möglich, die Laufräder identisch zu gestalten. Ein eventuell notwendiger Unterschied im Unterstützungsgrad des Zusatzantriebs wird durch die Steuerelektronik erzeugt.

Weitere entscheidende Vorteile ergeben sich, wenn der oder die Energiespeicher unter der vorderen Hälfte des Sitzes angeordnet sind. Bei der Vorwärtsbewegung von Rollstühlen, insbesondere wenn diese durch die Zusatzantriebe unterstützt wird, kann es aufgrund der Radposition zu einem nach hinten Kippen des Rollstuhls kommen. Um dem entgegenzuwirken, kann der Energiespeicher möglichst unter dem vorderen Bereich der Sitzfläche montiert werden.

Die Energiespeicher können vorzugsweise wiederaufladbare Akkumulatoren sein. Weiter ist es von Vorteil, wenn sie abnehmbar am Fahrzeug angeordnet sind. Sie lassen sich dadurch leicht austauschen.

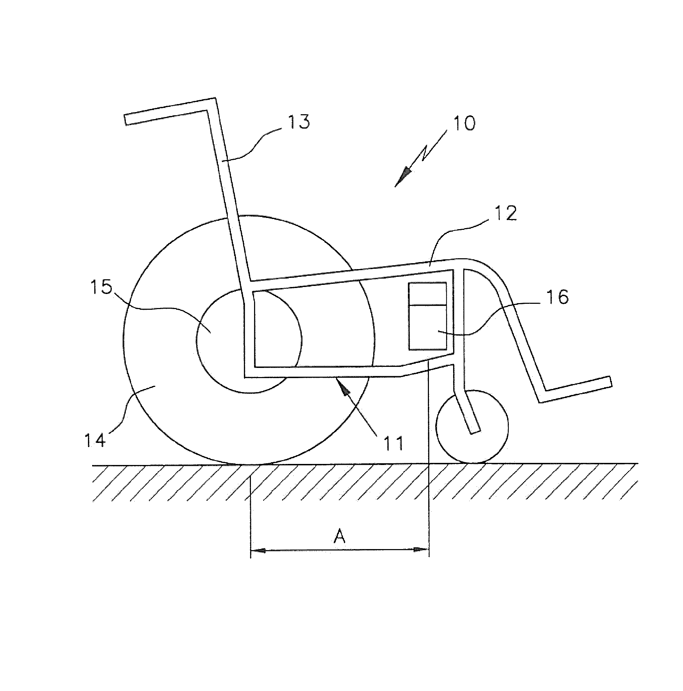

Die Zeichnung zeigt eine schematische Darstellung eines Ausführungsbeispiels eines erfindungsgemäßen Rollstuhls 10. Dieser weist einen Rollstuhlrahmen 11 auf, an dem ein Sitz 12 mit einer Rückenlehne 13 montiert ist. Außerdem sind zwei Laufräder 14 am Rahmen 11 abnehmbar befestigt, die in ihrem Nabenbereich 15 einen hier nicht näher dargestellten motorischen Zusatzantrieb aufweisen. Zur Stromversorgung der Motoren ist ein Energiespeicher 16 vorgesehen, der unterhalb des vorderen Bereiches des Sitzes 12 montiert ist. Dadurch weist er einen Abstand A zum Nabenbereich 15 auf und kann durch sein relativ hohes Gewicht ein nach hinten Kippen des Rollstuhls 10 verhindern.

## Patentansprüche

1. Kleinfahrzeug, insbesondere Rollstuhl, mit einem Sitz (12) und mit mindestens zwei abnehmbaren Laufrädern (14), die einen motorischen Zusatzantrieb aufweisen, **dadurch gekennzeichnet, dass** der oder die Energiespeicher (16) für die Zusatzantriebe außerhalb der Räder (14) am Fahrzeug (10) angeordnet sind und dass die Räder (14) über Schnittstellen mit dem Fahrzeug (10) und einer Steuerelektronik verbindbar sind, wobei die Schnittstellen der Steuerelektronik ihre jeweilige Fahrzeugseite signalisieren und das an sie angeschlossene Laufrad (14) entsprechend dem gewünschten Antriebsverhalten der Laufräder (14) auf der linken und der rechten Fahrzeugseite mit Strom versorgen.

2. Kleinfahrzeug nach Anspruch 1 oder 2, **dadurch gekennzeichnet, dass** die Laufräder (14) identisch gestaltet sind.

3. Kleinfahrzeug nach Anspruch 1 oder 2, **dadurch gekennzeichnet, dass** der oder die Energiespeicher (16) unter der vorderen Hälfte des Sitzes (12) angeordnet sind.

4. Kleinfahrzeug nach einem der vorhergehenden Ansprüche, **dadurch gekennzeichnet, dass** der oder die Energiespeicher (16) wiederaufladbare Akkumulatoren sind.

5. Kleinfahrzeug nach einem der vorhergehenden Ansprüche, **dadurch gekennzeichnet, dass** die Energiespeicher (16) abnehmbar am Fahrzeug (10) angeordnet sind.
